# EUROPÄISCHE PATENTSCHRIFT

(11) **EP 2 792 643 B1**
(45) Veröffentlichungstag und Bekanntmachung des Hinweises auf die Patenterteilung: **16.03.2016**
(21) Anmeldenummer: 14000999.4
(22) Anmeldetag: 18.03.2014
(51) Int. Cl.: C02F 1/28, C02F 1/52, C02F 1/56, C02F 9/00, B01D 15/00, B01D 21/00

(54) **Verfahren und Vorrichtung zur Entfernung gelöster Wasserinhaltsstoffe in der Wasser- und Abwassertechnik**
Method and device for removing dissolved substances in water in water and sewage technology
Procédé et dispositif d'élimination de composants dissous dans l'eau dans la technique de traitement de l'eau et des eaux usées

(30) Priorität: 15.04.2013 DE 102013006985
(43) Veröffentlichungstag der Anmeldung: 22.10.2014
(73) Patentinhaber: Berliner Wasserbetriebe Anstalt des öffentlichen Rechts, 10179 Berlin (DE); Technische Universität Berlin, 10623 Berlin (DE)
(72) Erfinder: Meier, Thomas, 13507 Berlin (DE); Meinel, Felix, 13349 Berlin (DE)

(56) Entgegenhaltungen:
- WO-A1-90/11254
- US-A- 2 108 021
- US-A- 5 269 940
- RONAN TREGUER ET AL: "Evaluation of Actiflo Carb Process for the Combined Removal of Trace Organic Compounds and Phosphorous during Wastewater Tertiary Treatment", PROCEEDINGS OF THE WATER ENVIRONMENT FEDERATION, Bd. 2012, Nr. 7, 1. Januar 2012 (2012-01-01), Seiten 7176-7196, XP055124717, ISSN: 1938-6478, DOI: 10.2175/193864712811703766

## Beschreibung

Die Erfindung betrifft ein Verfahren zur Entfernung gelöster Wasserinhaltsstoffe aus Wasser, das entweder Trinkwasser, Oberflächenwasser, Betriebswasser oder Abwasser ist, mittels pulverförmiger Adsorptionsmittel, das in der Prozesswasseraufbereitung der chemischen Industrie und in der Wasser- und Abwassertechnik, vorzugsweise in der Trinkwasseraufbereitung und Abwasserreinigung Anwendung findet, und eine Vorrichtung zur Durchführung des Verfahrens.

Bekannt ist, dass mittels pulverförmiger Adsorptionsmittel sowie Fällung eine Vielzahl gelöster Wasserinhaltsstoffe, insbesondere organische Verbindungen, entfernt werden können. In der Kläranlage Steinhäule in Neu-Ulm (http://www.klaerwerk.info/Abwasserreinigung/ Kommunale-Abwasserbehandlung-Nachgeschaltete-Pulveraktivkohlestufe-im-Klaerwerk-bindet-Arzneimittelwirkstoffe) wurde dazu ein Verfahren entwickelt, bei dem nach dem Nachklärbecken einer konventionellen Belebungsanlage mit Nitrifikation und Denitrifikation Fällmittel dosiert wird. In die erste der drei gleich großen Stufen eines danach angeordneten Kontraktreaktors wird eine Pulveraktivkohle-Suspension dosiert. In den drei Stufen des drucklos mit freiem Wasserspiegel betriebenen Reaktors finden simultan die Adsorption der Wasserinhaltsstoffe an der Aktivkohle und die Flockung der Kohlepartikel statt. Nach dem Kontaktreaktor wird Flockungshilfsmittel dosiert, um eine verbesserte Abtrennung der Flocken zu erzielen. Der Nachteil besteht darin, dass aufgrund des konstanten Reaktionsvolumens eine gleichbleibende Aufenthaltszeit im Kontraktreaktor nur bei konstantem Durchfluss gewährleistet werden kann. Der Durchfluss und die Aufenthaltszeit sind über das Volumen nach der Formel t = V/Q gekoppelt. Da bekanntermaßen sowohl die Entfemungsrate der gelösten Wasserinhaltsstoffe als auch die Flockungsleistung von der Kontaktzeit im Reaktor abhängen, wird in dem vorgestellten Verfahren keine gleichbleibende Ablaufqualität bei schwankenden Zuflüssen gewährleistet.
Vergleichbare Verfahren werden auch in dem Abschlussbericht der Eidgenössische Anstalt für Wasserversorgung, Abwasserreinigung und Gewässerschutz (EAWAG): Einsatz von Pulveraktivkohle zur Elimination von Mikroverunreinigungen aus kommunalem Abwasser-Abschlussbericht, 2010, S. 24) und in der Elimination von Arzneimitteln und organischen Spurenstoffen: Entwicklung von Konzeptionen und innovativen, kostengünstigen Reinigungsverfahren von Grünebaum, 2011, vorgestellt. Hier werden in drei Zonen unterteilte Kontaktreaktoren mit freiem Wasserspiegel eingesetzt, bei denen hydraulische Aufenthaltszeit und Durchfluss ebenfalls gekoppelt sind.

Im Klärwerk Mannheim (Alt, K. und Mauritz, A, 2010: Projekt zur Teilstrombehandlung mit Pulveraktivkohle im Klärwerk Mannheim; KA - Korrespondenz Abwasser, Abfall, 57, 2010) finden Einmischung von Pulveraktivkohle und Flockungsmittel, Adsorption und Flockung in der Kläranlage nachgeschalteten Kontakt- oder Mischbecken statt. Der Nachteil besteht darin, dass der Durchfluss und die Aufenthaltszeit ebenfalls gekoppelt sind.
Durch Variation des Wasserspiegels in Ein- oder Mehrkammersystemen wird das genutzte Reaktionsvolumen variiert. Hierdurch lassen sich Durchfluss und Aufenthaltszeit entkoppeln. Der Nachteil in diesen Systemen ist, dass durch die veränderlichen Wasserstände nicht in jedem Betriebszustand ein druckloser oder Freispiegelabfluss gewährleistet wird, was sich aus konstruktiven Randbedingungen heraus häufig als notwendig erweist. Weiterhin ist die Variation der Wasserspiegelhöhe mit zusätzlichem Aufwand in der Mess-, Steuer- und Regeltechnik verbunden.
Ein weiteres bekanntes System arbeitet mit beweglichen Wänden. Hierbei ist eine senkrechte Wand rundum abgedichtet und beweglich gelagert, sodass die Größe des Reaktors variiert werden kann. Dies hat eine Entkopplung von Durchfluss und Aufenthaltszeit zur Folge. Nachteil sind die bei beweglichen Teilen vergleichsweise hohen Produktionskosten sowie der erhöhte Aufwand, der für die Abdichtung der beweglichen Reaktorwand erforderlich sind.
In der DE 603 16 195 T2 wird ein Verfahren zur Behandlung von Abwasser durch mehrstufige Dosierung pulverförmiger Reaktionsmittel, insbesondere Adsorptionsmittel, in Kombination mit Membranfiltration beschrieben, jedoch kein Reaktor, der zur Variation von Durchfluss und/oder Aufenthaltszeit geeignet ist.
In der US 2011/0023715 A1 wird ein komplexes Abwasserbehandlungsverfahren mit Entgasung, Enthärtung, Filtration, Ionenaustausch und Umkehrosmose beschrieben. Die ersten Verfahrensschritte finden in einem in mehrere Zonen unterteilten Kontaktreaktor statt, der aber nicht zur Variation von Durchfluss und/oder Aufenthaltszeit geeignet ist.
Das ACTIFLO-CARB-Verfahren ist ein Verfahren, das Flockung und Sedimentation kombiniert und die Flockung und Absetzfähigkeit durch die Zugabe von Mikrosand verbessert (Herbst, H. und Hilbig, R., 2012: Einbindung einer Anlage zur Spurenstoffelimination mittels Aktivkohle in die Abwasserfiltration der Kläranlage Neuss Ost. Abschlussbericht der Grontmij GmbH für InfraStruktur Neuss AöR). Der Sand beschwert die Flocken, die daraufhin in einem Lamellenabscheider abgetrennt werden. Vom entstehenden Schlamm wird der Sand dann mit einem Hydrozyklon getrennt. Der Teil des Reaktors, in dem Flockung und Adsorption stattfinden, ist in drei Zonen unterteilt. Das Wasser passiert eine Überfallkante vom Koagulationsbecken, als erste Zone, zum Injektionsbecken, als zweite Zone, und gelangt unter einem Schütz hindurch in das Reifebecken, als dritte Zone. Auch hier ist der Nachteil, dass bei konstantem Wasserspiegel keine Entkopplung von Durchfluss und Aufenthaltszeit möglich ist.

In der WO 2011/103651 A1 werden ein Verfahren und eine Vorrichtung zur Behandlung von Wässern beschrieben, die dem ActiFlow Carb-Verfahren sehr ähnlich sind. Auch hier ist keine Variation von Durchfluss und/oder Aufenthaltszeit möglich.

Die Aufgabe der Erfindung ist es, ein kostengünstiges und technologisch einfaches Verfahren zur Entfernung gelöster Wasserinhaltsstoffe aus Wasser, das entweder Trinkwasser, Oberflächenwasser, Betriebswasser oder Abwasser ist, unter Entkopplung von Durchfluss und Aufenthaltszeit und mit gleichbleibendem Wasserspiegel sowie eine Vorrichtung zur Durchführung des Verfahrens zu schaffen.

Erfindungsgemäß wird die Aufgabe dadurch gelöst, dass einzelne Zonen eines Kontaktreaktors im Ein-, Zwei- oder Dreizonenbetrieb durch vorhandene Zu- und Ablauföffnungen gesteuert werden. Im Einzonenbetrieb wird das Wasser dem Kontaktreaktor durch eine Zulauföffnung in der ersten Zone zugeführt und verlässt diese Zone im Freispiegelabfluss durch eine in Wasserspiegelhöhe befindliche Ablauföffnung. Im Zweizonenbetrieb wird das Wasser durch eine Zulauföffnung in die zweite Zone des Kontaktreaktors geleitet, unterströmt eine dichte zweite Trennwand und wird in die dritte Zone geleitet und durch eine in Wasserspiegelhöhe befindliche Ablauföffnung im Freispiegelabfluss herausgeführt. Im Dreizonenbetrieb wird das Wasser durch eine in der ersten Zone liegende Zulauföffnung zugeführt, überströmt die erste Trennwand und wird in die zweite Zone geleitet, unterströmt danach die zweite Trennwand und wird in die dritte Zone geleitet und im Freispiegelabfluss durch eine in Wasserspiegelhöhe befindliche Ablauföffnung herausgeführt.
Das genutzte Reaktorvolumen wird durch die Nutzung einer Zone, zweier Zonen oder aller drei Zonen variabel. Des Weiteren wird ein Freispiegelabfluss mit gleichem Flüssigkeitsstand durch die vorhandenen Ablauföffnungen gewährleistet.
Zur Flockung von partikulären Wasserinhaltsstoffen und/oder zur Fällung von gelösten Wasserinhaltsstoffen werden im Bedarfsfall Eisen- und/oder Aluminiumsalze und/oder Polymer vor, in und/oder nach dem Kontaktreaktor zugegeben. Zur Adsorption von gelösten Wasserinhaltsstoffen wird im Bedarfsfall ein Adsorptionsmittel, beispielsweise Pulveraktivkohle, vor, in, und/oder nach dem Kontaktreaktor zugegeben. Um die Konzentration des Adsorptionsmittels zu regulieren, wird im Bedarfsfall Wasser aus dem Reaktor abgezogen. Der Kontaktreaktor besteht aus drei, mittels zweier Trennwände abgetrennten Zonen, in dem für den Ein-, Zwei- und Dreizonenbetrieb Zu- und Ablauföffnungen angeordnet sind. In der ersten Zone sind mindestens eine Zulauföffnung und eine Ablauföffnung in Höhe des Wasserspiegels angeordnet, in der zweiten Zone ist mindestens eine Zu- und in der dritten Zone mindestens eine Ablauföffnung in Höhe des Wasserspiegels angeordnet. In einer oder mehreren Zonen sind im Bedarfsfall Rührwerke und/oder Dosiereinrichtungen für Flockungs- und/oder Fällmittel, Adsorptionsmittel, Polymer und/oder weitere Betriebs- oder Hilfsstoffe angeordnet. Zusätzlich sind im Bedarfsfall eine oder mehrere Zu- und/oder Ablauföffnungen zur Rezirkulation und Einmischung von im Nachgang des Kontaktreaktors abgetrenntem Schlamm angebracht.
Der Kontaktreaktor besteht vorzugsweise, aber nicht notwendigerweise, aus Kunststoff, Metall oder Stahlbeton.

Vorteile des erfindungsgemäßen Verfahrens und der dazugehörigen Vorrichtung sind, dass diese für die Entfernung von Spurenstoffen und organischer Restverschmutzung bei der Reinigung von kommunalem Abwasser, Oberflächenwasser und bei der Trink- und Betriebswasseraufbereitung zur Einstellung der optimalen Reaktionszeit geeignet sind. Für eine gleichbleibende Prozessstabilität und bei variierenden Zuflüssen werden ungefähr gleichbleibende Kontaktzeiten für die Adsorptionsmittel und die Flockungsmittel gewährleistet. Weiterhin kommt die Vorrichtung ohne bewegliche Teile aus, was den gerätetechnischen Aufwand erheblich reduziert und somit diese kostengünstig herzustellen ist.
Auch wird das Wasser durch die vorhandenen konstruktiven Elemente verwirbelt. Somit werden die gleichmäßige Verteilung der Adsorptionsmittel, der Fällmittel und die Flockenbildung unterstützt.
In allen Betriebsweisen werden die genutzten Zonen neben der horizontalen Richtung auch vertikal durchströmt. Auf diese Weise werden Kurzschlussströmungen verhindert.

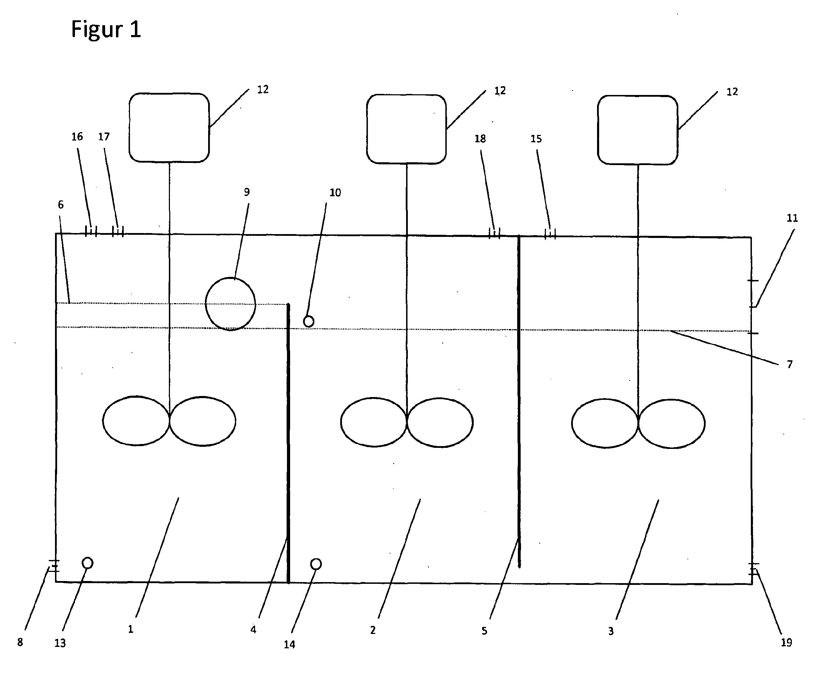

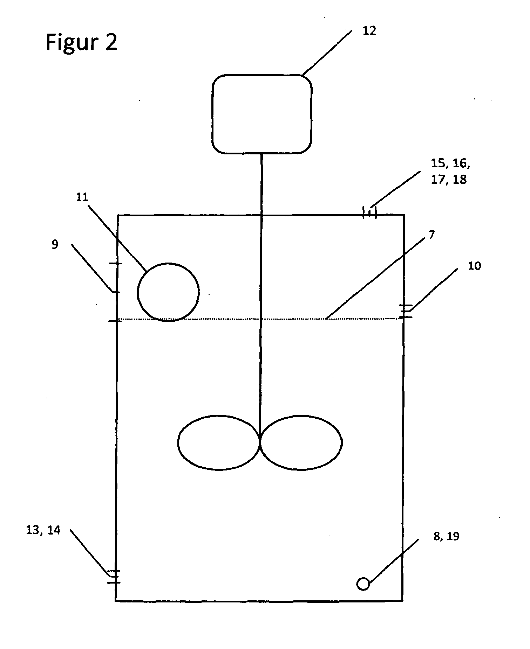

Die Erfindung soll nachstehend anhand der Fig. 1 und Fig. 2 näher erläutert werden.

Die Figur 1 zeigt die Seitenansicht eines Kontaktreaktors, der in drei Zonen unterteilt ist und für die Reinigung von Oberflächenwasser eingesetzt wird.
Die Figur 2 zeigt die Frontalansicht eines Kontaktreaktors.

Der oben geschlossene Kontaktreaktor besteht aus Kunststoff und ist in drei Zonen 1, 2, 3 unterteilt, die durch feste Trennwände 4 und 5 voneinander getrennt sind. Die erste Trennwand 4 ist dicht am Boden des Reaktors und an den Seiten befestigt, beispielsweise ist diese verschweißt. Die Höhe entspricht dem Wasserspiegel in der Zone 1 im Dreizonenbetrieb 6.
Die zweite Trennwand 5 befindet sich zwischen den Zonen 2 und 3. Diese ist an den Seiten dicht mit der Wandung des Reaktors verbunden. Unten befindet sich ein Durchlass in Höhe von beispielsweise 5 - 20 % der Höhe des Reaktors, sodass das Oberflächenwasser die Wand unterströmt. Nach oben hin überragt die zweite Trennwand 5 den Wasserspiegel 7 derart, dass eine Überströmung, auch bei Turbulenzen im Kontaktreaktor nicht möglich ist.
Im Einzonenbetrieb gelangt das Oberflächenwasser durch die Zulauföffnung 8 in die Zone 1 und verlässt diese im freien Wasserspiegel 7 durch eine Ablauföffnung 9. Während der Aufenthaltszeit in der Zone 1, üblich sind 5 - 15 Minuten, finden die Adsorption und Flockung statt.
Im Zweizonenbetrieb gelangt das Oberflächenwasser durch eine Zulauföffnung 10 in die Zone 2, unterströmt die zweite Trennwand 5, gelangt in die Zone 3 und verlässt diese im freien Wasserspiegel 7 durch die Ablauföffnung 11.
Im Dreizonenbetrieb gelangt das Oberflächenwasser durch die Zulauföffnung 8 in die Zone 1. Hier stellt sich ein leicht erhöhter Wasserspiegel 6 ein, damit die erste Trennwand 4 in die Zone 2 hinein überströmt wird. Von dort gelangt das Oberflächenwasser, die zweite Trennwand 5 unterströmend, in die Zone 3 und verlässt diese über die Ablauföffnung 11.
In den drei Zonen 1, 2, 3 sind Rührwerke 12 zur Durchmischung und zur Verhinderung von Sedimentationsprozessen angeordnet. Um eine Schlammrezirkulation zu ermöglichen, ist in der Zone 1 für den Ein- und Dreizonenbetrieb und in der Zone 2 für den Zweizonenbetrieb je eine Zulauföffnung 13 und 14 für im Nachgang des Kontaktreaktors abgetrennten und anschließend rückgeführten Schlamm angeordnet. Für eine Polymerdosierung im Zwei- und Dreizonenbetrieb ist in der Zone 3 die Zulauföffnung 15 angeordnet, für eine Polymerdosierung im Einzonenbetrieb ist in der Zone 1 die Zulauföffnung 16 angeordnet. Um im Bedarfsfall Fällmittel zu dosieren, sind für den Einzonenbetrieb die Zulauföffnung 17 in der Zone 1 und für den Zweiund Dreizonenbetrieb die Zulauföffnung 18 in der Zone 3 angeordnet. Um eine konstante Konzentration des Adsorptionsmittels im System zu gewährleisten, wird über die Ablauföffnung 19 kontinuierlich Wasser entnommen.

Vor oder nach dem Eintritt in den Reaktor wird das Oberflächenwasser mit einem Adsorptionsmittel, vorzugsweise Pulveraktivkohle und einem Flockungsmittel versetzt. Üblich sind Flockungsmittelkonzentrationen von 5 - 20 mg/L Metall, vorzugsweise als Eisen- oder Aluminiumchlorid oder -sulfat und Adsorptionsmittelkonzentrationen, vorzugsweise zwischen 10 und 30 mg/L Pulveraktivkohle als Suspension. Im Reaktor oder nach dem Ablauf des Reaktors wird als Flockungshilfsmittel ein Polymer dosiert, üblicherweise 0,1 - 0,5 mg/L. Diese Dosierungen werden im Bedarfsfall als Zwei- oder Mehrpunktdosierungen an jeweils unterschiedlichen Stellen durchgeführt.
Nicht genutzte Zu- und Ablauföffnungen sind verschlossen.

### Aufstellung der verwendeten Bezugszeichen zur Patentanmeldung "Verfahren und Vorrichtung zur Entfernung gelöster Wasserinhaltsstoffe in der Wasser- und Abwassertechnik"

- 1: Erste Zone
- 2: Zweite Zone
- 3: Dritte Zone
- 4: Erste Trennwand
- 5: Zweite Trennwand
- 6: Wasserspiegel in der Zone 1 bei Dreizonenbetrieb
- 7: Wasserspiegel an der jeweiligen Ablauföffnung
- 8: Zulauföffnung für den Ein- und Dreizonenbetrieb
- 9: Ablauföffnung für den Einzonenbetrieb
- 10: Zulauföffnung für den Zweizonenbetrieb
- 11: Ablauföffnung für den Zwei- und Dreizonenbetrieb
- 12: Rührwerke
- 13: Öffnung zur Einleitung von abgetrenntem Schlamm im Ein- und Dreizonenbetrieb
- 14: Öffnung zur Einleitung von abgetrenntem Schlamm im Zweizonenbetrieb
- 15: Öffnung zur Polymerdosierung im Zwei- und Dreizonenbetrieb
- 16: Öffnung zur Polymerdosierung im Einzonenbetrieb
- 17: Öffnung zur Fällmitteldosierung im Bedarfsfall im Ein- und Zweizonenbetrieb
- 18: Öffnung zur Fällmitteldosierung im Bedarfsfall im Dreizonenbetrieb
- 19: Öffnung zur Entnahme von Wasser im Bedarfsfall

## Patentansprüche

1. Verfahren zur Entfernung gelöster Wasserinhaltsstoffe aus Wasser, das entweder Trinkwasser, Oberflächenwasser, Betriebswasser oder Abwasser ist, unter Entkoppelung von Durchfluss und Aufenthaltszeit, in einem mittels zweier Trennwände in drei Zonen unterteilten Kontaktreaktor
**dadurch gekennzeichnet, dass**
- im Einzonenbetrieb das Wasser dem Kontaktreaktor durch eine Zulauföffnung (8) in der ersten Zone (1) zugeführt wird und in dieser Zone (1) durch eine in Wasserspiegelhöhe (7) befindliche Ablauföffnung (9) im Freispiegelabfluss herausgeführt wird,
- im Zweizonenbetrieb das Wasser durch eine Zulauföffnung (10) in die zweite Zone (2) des Kontaktreaktors geleitet wird, eine dichte zweite Trennwand (5) unterströmt und in die dritte Zone (3) geleitet wird und anschließend durch eine in Wasserspiegelhöhe (7) befindliche Ablauföffnung (11) im Freispiegelabfluss herausgeführt wird,
- im Dreizonenbetrieb das Wasser durch eine in der ersten Zone (1) liegende Zulauföffnung (8) zugeführt wird, die erste Trennwand (4) überströmt, in die zweite Zone (2) geleitet wird, danach die zweite Trennwand (5) unterströmt, in die dritte Zone (3) geleitet wird und durch eine in Wasserspiegelhöhe (7) befindliche Ablauföffnung (11) im Freispiegelabfluss herausgeführt wird.

2. Verfahren nach dem Anspruch 1,
**dadurch gekennzeichnet, dass**
Eisen- und/oder Aluminiumsalze und/oder Polymer zur Flockung der partikulären Wasserinhaltsstoffe und/oder zur Fällung gelöster Wasserinhaltsstoffe ein- oder mehrstufig vor, in und/oder nach dem Kontaktreaktor zugegeben werden.

3. Verfahren nach den Ansprüchen 1 und 2,
**dadurch gekennzeichnet, dass**
Adsorptionsmittel, beispielsweise Aktivkohle, ein- oder mehrstufig vor, in und/oder nach dem Kontaktreaktor zugegeben werden.

4. Verfahren nach den Ansprüchen 1 bis 3,
**dadurch gekennzeichnet, dass**
zur Regulierung der Adsorptionsmittelkonzentration Wasser in definierter Menge aus dem Reaktor abgezogen wird.

5. Vorrichtung zur Durchführung des Verfahrens nach dem Anspruch 1, bestehend aus dem mittels zweier Trennwände (4, 5) in drei Zonen (1, 2, 3) unterteilten Kontaktreaktor,
**dadurch gekennzeichnet, dass**
- in der ersten Zone (1) mindestens eine Zulauföffnung (8) und eine Ablauföffnung (9) in Höhe des Wasserspiegels angeordnet sind
- in der zweiten Zone (2) mindestens eine Zulauföffnung (10) angeordnet ist,
- in der dritten Zone (3) mindestens eine Ablauföffnung (11) in Höhe des Wasserspiegels angeordnet ist.

6. Vorrichtung nach dem Anspruch 5,
**dadurch gekennzeichnet, dass**
in einer Zone oder mehreren Zonen (1, 2 und/oder 3) Rührwerke (12) angeordnet sind.

7. Vorrichtung nach den Ansprüchen 5 und 6,
**dadurch gekennzeichnet, dass**
in einer oder mehreren Zonen (1, 2 und/oder 3) Dosiereinrichtungen (15, 16, 17, 18) für Betriebs- oder Hilfsstoffe, beispielsweise Fällmittel, Flockungsmittel, Adsorptionsmittel und/oder Polymer, angeordnet sind.

8. Vorrichtung nach den Ansprüchen 5 bis 7,
**dadurch gekennzeichnet, dass**
zusätzlich eine oder mehrere Zu- und/oder Ablauföffnungen (13, 14) zur Einleitung von im Kreislauf gefahrenem Schlamm und/oder zum Abzug von Wasser aus dem Kontaktreaktor angebracht sind.

## Claims

1. Method of removing dissolved water constituents from water, which is drinking water, surface water, mains water or waste water, with decoupling of throughflow and dwell time, in a contact reactor divided into three zones by means of two partitions, **characterised in that**
- in single-zone operation the water is fed to the contact reactor through an inflow opening (8) into the first zone (1) and in this zone (1) is conducted out in free surface outflow through an outflow opening (9) disposed at the height (7) of the water level,
- in double-zone operation the water is conducted through an inflow opening (10) into the second zone (10) of the contact reactor, flows under a sealed second partition (5), is conducted into the third zone (3) and is subsequently conducted out in free surface outflow through an outflow opening (11) disposed at the height (7) of the water level, and
- in triple-zone operation the water is fed through an inflow opening (8) lying in the first zone (1), flows over the first partition (4), is conducted into the second zone (2), thereafter flows under the second partition (5), is conducted into the third zone (3) and is conducted out in free surface outflow through an outflow opening (11) disposed at the height (7) of the water level.

2. Method according to claim 1, **characterised in that** iron and/or aluminium salts and/or polymers for flocculation of the particulate water constituents and/or for precipitation dissolved water constituents are added in one step or multiple steps before, in and/or after the contact reactor.

3. Method according to claims 1 and 2, **characterised in that** adsorption media, for example activated carbon, are added in one step or multiple steps before, in and/or after the contact reactor.

4. Method according to claims 1 to 3, **characterised in that** water is withdrawn in a defined quantity from the reactor in order to regulate the concentration of adsorption media.

5. Device for carrying out the method according to claim 1, consisting of the contact reactor divided into three zones (1, 2, 3) by means of two partitions (4, 5),
**characterised in that**
- at least one inflow opening (8) and outflow opening (9) are arranged in the first zone (1) at the height of the water level,
- at least one inflow opening (10) is arranged in the second zone (2) and
- at least one outflow opening (11) is arranged in the third zone (3) at the height of the water level.

6. Device according to claim 5, **characterised in that** stirring devices (12) are arranged in one zone or several zones (1, 2 and/or 3).

7. Device according to claims 5 and 6, **characterised in that** metering devices (15, 16, 17, 18) for operating substances or additives, for example precipitants, flocculants, adsorption media and/or polymers, are arranged in one or more zones (1, 2 and/or 3).

8. Device according to claims 5 to 7, **characterised in that** in addition one or more inflow and/or outflow openings (13, 14) for introduction of slurry moved in the circuit and/or for extraction of water from the contact reactor are provided.

## Revendications

1. Procédé permettant d'éliminer des composés dissouts dans une eau telle qu'une eau de boisson, une eau de ruissellement, une eau industrielle ou des eaux usées en découplant la circulation et le temps de séjour dans un réacteur de contact subdivisé en trois zones par deux parois de séparation,
**caractérisé en ce que**
- dans le mode de fonctionnement à une seule zone, l'eau est introduite dans le réacteur de contact par une ouverture d'entrée (8) dans la première zone (1), et dans cette zone (1) est évacuée en écoulement libre par une ouverture de sortie (9) située à la hauteur du niveau d'eau (7),
- dans le mode de fonctionnement à deux zones, l'eau est introduite par une ouverture d'entrée (10) dans la seconde zone (2) du réacteur de contact, passe au-dessous d'une seconde paroi de séparation étanche (5) et est introduite dans la troisième zone (3), puis est évacué en écoulement libre par une ouverture de sortie (11) située à la hauteur du niveau d'eau (7),
- dans le mode de fonctionnement à trois zones, l'eau est introduite par une ouverture d'entrée (8) située dans la première zone (1), passe au-dessus de la première paroi de séparation (4), est introduite dans la seconde zone (2), puis passe au-dessous de la seconde paroi de séparation (5), est introduite dans la troisième zone (3) et est évacuée en écoulement libre par une ouverture de sortie (11) située à la hauteur du niveau d'eau (7).

2. Procédé conforme à la revendication 1,
**caractérisé en ce que**
l'on ajoute dans et/ou en aval du réacteur de contact en une ou plusieurs étapes, des sels de fer et/ou d'aluminium et/ou un polymère permettant de floculer les composés particulaires renfermés dans l'eau et/ou de précipiter les composés dissouts dans l'eau.

3. Procédé conforme aux revendications 1 et 2,
**caractérisé en ce que**
l'on ajoute un agent d'adsorption, en particulier du charbon actif en une ou plusieurs étapes, avant, dans, et/ou en aval du réacteur de contact.

4. Procédé conforme aux revendications 1 à 3,
**caractérisé en ce que**
pour permettre une régulation de la concentration en agent d'adsorption l'on soutire de l'eau du réacteur selon des quantités définies.

5. Dispositif permettant la mise en oeuvre du procédé conforme à la revendication 1,
constitué par
un réacteur de contact subdivisé en trois zones (1, 2, 3) au moyen de deux parois de séparation (4, 5),
**caractérisé en ce que**
- la première zone (1) comprend au moins une ouverture d'entrée (8) et une ouverture d'évacuation (9) située à la hauteur du niveau d'eau,
- la seconde zone (2) comprend au moins une ouverture d'entrée (10),
- la troisième zone (3) comprend au moins une ouverture d'évacuation (11) située à la hauteur du niveau d'eau.

6. Dispositif conforme à la revendication 5,
**caractérisé en ce que**
des agitateurs (12) sont montés dans une ou plusieurs des zones (1,2 et/ou 3).

7. Procédé conforme aux revendications 5 et 6,
**caractérisé en ce que**,
dans une ou plusieurs des zones (1, 2 et/ou 3) sont montés des dispositifs d'addition dosée (15, 16, 17, 18) de composés de fonctionnement ou auxiliaires, tels que des agents de précipitation, des agents de floculation, des agents d'adsorption, et/ou des polymères.

8. Dispositif conforme aux revendications 5 à 7,
**caractérisé en ce qu'**
il comprend en outre une ou plusieurs ouvertures d'entrée et/ou d'évacuation (13, 14) pour déverser des boues circulant en circuit fermé et/ou pour extraire de l'eau du réacteur de contact.
